# EUROPÄISCHE PATENTANMELDUNG

(11) **EP 3 176 657 A1**
(43) Veröffentlichungstag der Anmeldung: **07.06.2017**
(21) Anmeldenummer: 15197610.7
(22) Anmeldetag: 02.12.2015
(51) Int. Cl.: G05B 19/19, G05B 19/4065

(54) **BESTIMMUNG DER STEIFIGKEIT EINES ANTRIEBSSTRANGES EINER MASCHINE, INSBESONDERE EINER WERKZEUG- ODER PRODUKTIONSMASCHINE**

(71) Anmelder: Siemens Aktiengesellschaft, 80333 München (DE)
(72) Erfinder: Bitterolf, David, 91056 Erlangen (DE); Forster, Gerhard, 90592 Schwarzenbruck (DE); Schäfers, Elmar, 90763 Fürth (DE); Schür, Torsten, 91058 Erlangen (DE)

(57) **Zusammenfassung**

Bei einer Maschine, insbesondere einer Werkzeug- oder Produktionsmaschine, soll auf einfache und kostengünstige Weise die Steifigkeit eines Antriebsstranges (1 bis 6) zur linearen Bewegung einer Maschinenkomponente (7) entlang einer Linearführung der Maschine ermittelt werden. Dabei umfasst der Antriebsstrang (1 bis 6) einen Motor (1) mit einem Motormesssystem (8) und der Linearführung (6) ist ein Längenmesssystem (9) zur Bestimmung der Position der Maschinenkomponente (7) zugeordnet, wobei die Maschine ferner eine numerische Steuerung (10) zur Regelung der Bewegung der Maschinenkomponente (7) umfasst. Es wird vorgeschlagen, die Steifigkeit des Antriebsstranges (1 bis 6) dadurch zu bestimmen, dass der Maschinenkomponente (7) eine konstante Beschleunigung mittels der numerischen Steuerung (10) vorgegeben wird, eine Differenz zwischen einer aus dem Motormesssystem (8) abgeleiteten Position der Maschinenkomponente (7) und einer zeitgleich durch das Längenmesssystem (9) gemessenen Position der Maschinenkomponente (7) während der Beschleunigungsphase mittels der numerischen Steuerung (10) bestimmt wird und die Differenz zu der Beschleunigung oder einer für die Beschleunigung erforderlichen Kraft zugeordnet wird und das so ermittelten Wertepaar und/oder ein aus dem Wertepaar hervorgehender Steifigkeitswert in der numerischen Steuerung (10) gespeichert wird. Diese Vorgehensweise hat den Vorteil, dass zur Bestimmung der Steifigkeit des Antriebsstranges (1 bis 6) nur ohnehin bei der betreffenden Maschine vorhandene Komponenten verwendet werden und keine zusätzliche Messausrüstung benötigt wird.

## Beschreibung

Die Erfindung betrifft ein Verfahren zum Bestimmen der Steifigkeit eines Antriebsstranges zur linearen Bewegung einer Maschinenkomponente entlang einer Linearführung einer Maschine, insbesondere einer Werkzeug- oder Produktionsmaschine, wobei der Antriebsstrang einen Motor mit einem Motormesssystem umfasst, wobei der Linearführung ein Längenmesssystem zur Bestimmung der Position der Maschinenkomponente zugeordnet ist und wobei die Maschine eine numerische Steuerung zur Regelung der Bewegung der Maschinenkomponente umfasst.

Ferner betrifft die Erfindung eine numerische Steuerung sowie eine Maschine zur Durchführung des Verfahrens.

Hersteller von Maschinen, insbesondere von Werkzeug- oder Produktionsmaschinen, verfolgen das Ziel, dass alle Maschinen einer Baureihe dieselben mechatronischen Eigenschaften aufweisen. Abweichungen sind in der Regel Hinweise auf Qualitätsmängel und müssen daher frühzeitig erkannt werden.

Der Betreiber einer Maschine möchte sicherstellen, dass die Maschine in ihrer Lebenszeit möglichst dieselben mechatronischen Eigenschaften aufweist wie bei ihrer Auslieferung. Abweichungen können beispielsweise durch den Ausfall von Komponenten bedingt sein und Stillstandszeit als Konsequenz haben oder bei einer Werkzeugmaschine zu Werkstücken von schlechter Qualität führen.

Sowohl für den Hersteller als auch für den Betreiber einer Maschine ist die Kenntnis der mechatronischen Eigenschaften der Maschine von entscheidender Bedeutung. Es ist daher nicht verwunderlich, dass eine Vielzahl an Tests bekannt ist, mittels derer die mechatronischen Eigenschaften einer Maschine erfasst bzw. überprüft werden können. Beispiele hierfür sind Tests bezüglich der Positioniergenauigkeit eines Werkzeugs, bezüglich der Reibung oder bezüglich des Schwingungsverhaltens der Maschine. Diese Tests setzen in der Regel hochgenaues und daher entsprechend kostenintensives Messequipment zur Durchführung der entsprechenden Messungen voraus.

Aus der Druckschrift EP2690513A1 ist die Durchführung eines Condition-Monitoring bei einer Maschine bekannt, bei dem ein dynamisches Modell der Maschine bereitgestellt wird und anschließend eine Frequenzanalyse für die Maschine durchgeführt wird zur Bestimmung der Werte von Modell-Parametern. Auf diese Weise können auch Federsteifigkeiten von Antriebssträngen der Maschine ermittelt werden.

Aufgabe der vorliegenden Erfindung ist es, auf einfache und kostengünstige Weise die Steifigkeit eines Antriebsstranges zur linearen Bewegung einer Maschinenkomponente entlang einer Linearführung einer Maschine zu bestimmen.

Diese Aufgabe wird durch ein Verfahren mit den in Patentanspruch 1 angegebenen Verfahrensschritten gelöst. Ferner wird die Aufgabe gelöst durch eine numerische Steuerung zur Durchführung des Verfahrens sowie durch eine Maschine mit einer entsprechenden numerischen Steuerung.

Gemäß der Erfindung wird die Steifigkeit eines Antriebsstrangs zur linearen Bewegung einer Maschinenkomponente entlang einer Linearführung der Maschine, insbesondere einer Werkzeug- oder Produktionsmaschine, bestimmt. Der Antriebsstrang umfasst einen Motor mit einem Motormesssystem. Ferner ist der Linearführung ein Längenmesssystem zur Bestimmung der Position der Maschinenkomponente zugeordnet. Zur Regelung der Bewegung der Maschinenkomponente umfasst die Maschine weiterhin eine numerische Steuerung. Zur Bestimmung der Steifigkeit gibt die numerische Steuerung zunächst eine konstante Beschleunigung für die Maschinenkomponente vor. Zu wenigstens einem bestimmten Zeitpunkt während der Beschleunigungsphase wird die Position der Maschinenkomponente aus dem von dem Motormesssystem gemessenen Positionswert abgeleitet. Dies ist möglich, da das Übersetzungsverhältnis des Antriebsstrangs zwischen dem Motor und der Maschinenkomponente bekannt ist. Weiterhin wird für denselben Zeitpunkt die Position der Maschinenkomponente auch durch das Längenmesssystem erfasst. Anschließend wird die Differenz aus den beiden Messwerten ermittelt. Diese Differenz wird in einer Wertetabelle zusammen mit der vorgegebenen Beschleunigung oder einer aus der Beschleunigung über die Beziehung F = m*a ermittelten Kraft in der numerischen Steuerung gespeichert. Zusätzlich oder alternativ kann auch ein Steifigkeitswert des Antriebsstrangs, der sich aus dem Quotienten der Kraft und der Differenz der beiden Positionsmessergebnisse ergibt, in der numerischen Steuerung gespeichert werden. Diese Vorgehensweise wird nun für unterschiedliche Beschleunigungen und/oder für Maschinenkomponenten unterschiedlicher Massen wiederholt, insbesondere so lange, bis die Steifigkeit in dem für den betreffenden Antriebsstrang relevanten Beschleunigungsbereich bzw. die bezüglich der Maschinenkomponenten in Frage kommenden Massen hinreichend genau bestimmt ist.

Die Steifigkeit eines Antriebsstrangs ist eine wesentliche Eigenschaft einer Maschine. Insbesondere aus einer Veränderung der Steifigkeit über die Lebenszeit der Maschine lassen sich wertvolle Aussagen über den Zustand der Maschine herleiten. Dieser Zustand der Maschine lässt schließlich Rückschlüsse auf die erreichbare Qualität der mit der Maschine erzeugten Werkstücke zu.

Es zeigt sich, dass die von dem Motormesssystem erzeugten Messwerte und die von dem Längenmesssystem erzeugten Messwerte über eine Genauigkeit verfügen, durch die sich die Elastizität bzw. Nachgiebigkeit des Antriebsstrangs zwischen dem Motor und der bewegten Maschinenkomponente und damit die Steifigkeit des Antriebsstranges hinreichend genau bestimmen lässt.

Es ist bekannt, dass die Steifigkeit eines Antriebsstranges, der aus einer rotierenden Bewegung des Motors eine lineare Bewegung einer Maschinenachse erzeugt, von den Torsionselementen wie Riemen oder Getriebe kaum beeinflusst wird. Dominant ist die Steifigkeit, die sich als lineare Verdrückung ausbildet. Das ist bei einem Kugelgewindetrieb die Druck-Zug Steifigkeit der Kugelgewindespindel, das Einfedern in das Axiallager und die Steifigkeit der Spindelmutter. Über diese Steifigkeiten wird die Kraft geleitet, welche den Maschinentisch bewegt. Bei einem Ritzel-Zahnstange-System wird das Zahnrad, welches in die Zahnstange greift, verdrückt und die Zahnsteifigkeit der Verzahnung kommt hinzu.

Die Erfindung bietet den Vorteil, dass zur Bestimmung der Steifigkeit des Antriebsstranges nur bei der Maschine ohnehin vorhandene Komponenten verwendet werden. Insbesondere das Motormesssystem sowie das Längenmesssystem sind beispielsweise zur exakten Positionierung einer Maschinenkomponente wie etwa eines Maschinentisches, einer Werkstückaufnahme oder einer Werkzeugaufnahme bei einer üblichen Werkzeugmaschine bereits vorhanden. Es erfolgt daher in der numerischen Steuerung der Maschine lediglich eine geschickte Verarbeitung ohnehin generierter Messwerte bzw. Daten. Für den Betreiber der Maschine bedeutet dies keinerlei zusätzlichen Aufwand.

Anders als bei einer idealen Feder ergibt sich bei einem Antriebsstrang einer Maschine kein linearer Zusammenhang zwischen der Längenänderung und der Kraft. Im Umkehrschluss heißt das, dass die Steifigkeit des Antriebsstrangs von der Kraft bzw. der Längenänderung abhängt.

Vorteilhaft wird aus einer Vielzahl an Messungen eine Kennlinie der Steifigkeit bestimmt und in der numerischen Steuerung abgelegt. Alternativ können bei Bedarf Zwischenwerte zwischen einzelnen Messpunkten auch in an sich bekannter Weise durch Interpolation ermittelt werden.

Aus einem Vergleich der zu unterschiedlichen Zeitpunkten für eine bestimmte Maschine ermittelten Steifigkeiten bzw. einen Vergleich der Steifigkeiten zwischen mehreren Maschinen gleicher Bauart lässt sich auf den aktuellen Zustand der betreffenden Maschine schließen. So kann beispielsweise aus einem Abflachen der Steifigkeit gefolgert werden, dass die Vorspannung eines Kugelgewindetriebes nachgelassen hat.

Bei der Ermittlung der Steifigkeit eines Antriebsstrangs zur Bewegung einer Maschinenkomponente tritt die zur Bewegung der Maschinenkomponente zu überwindende Reibkraft als Störgröße auf. Zur Ermittlung genauerer Steifigkeitswerte wird daher die Reibkraft bei der Berechnung berücksichtigt bzw. kompensiert. Eine bekannte Methode zur Ermittlung der Reibkraft einer Werkzeugmaschine basiert auf dem so genannten Kreisformtest. Im Zusammenhang mit der Erfindung hat diese Messung jedoch den Nachteil, dass die Antriebsachsen ständig wechselnden Beschleunigungen ausgesetzt sind. Im Zusammenhang mit der Erfindung bieten daher andere Messmethoden zur Bestimmung der Reibkraft Vorteile gegenüber dem Kreisformtest. Bei einer ersten Methode wird die Reibkraft aus einer Vielzahl an Messungen der Stromaufnahme des Motors ermittelt, bei denen die Maschinenkomponente mit unterschiedlichen Geschwindigkeiten, jedoch während der jeweiligen Messung mit konstanter Geschwindigkeit bewegt wird. Durch die Vielzahl an Messungen wird so die Reibkraft in Abhängigkeit der Geschwindigkeit ermittelt. Der Zusammenhang zwischen Kraft, Masse, Beschleunigung und Reibkraft drückt sich in der Formel F = m*a + F_{R} aus. Da während der beschleunigten Bewegung während der Steifigkeitsmessung die Geschwindigkeit der Maschinenkomponente zu jedem Zeitpunkt bekannt ist, kann auch die Reibkraft für die jeweilige Geschwindigkeit berücksichtigt bzw. kompensiert werden. In der Steuerung werden dann nicht die Werte bezüglich der gemäß obiger Formel bestimmten Gesamtkraft sondern die Werte bezüglich der um die Reibung verminderten Kraft F' = F - F_{R} hinterlegt bzw. der Differenz der von den Positionsmesssystemen gemessenen Werte zugeordnet.

Eine alternative Methode zur Bestimmung der Reibkraft in Abhängigkeit der Geschwindigkeit, mit der eine Maschinenkomponente bewegt wird, ist die messtechnische Ermittlung der so genannten Stribeck-Kurve. Die Stribeck-Kurve einer Maschinenachse wird bestimmt durch Bewegen der Achse mit verschiedenen, während der jeweiligen Messung jedoch konstanten Geschwindigkeiten. Aus dem Motormoment folgt die zur Überwindung der Reibung erforderliche Kraft. Jede Bewegung mit einer bestimmten Geschwindigkeit ergibt einen Punkt auf der Stribeck-Kurve. Da die Reibung auch abhängig von der Position der Achse in der Maschine sein kann, ist es sinnvoll, abhängig von der Position mehrere solche Stribeck-Kurven für die Achse zu ermitteln und in der numerischen Steuerung zu speichern.

Insgesamt führt die Kompensation der Reibung zu genaueren Werten bezüglich der ermittelten Steifigkeit eines Antriebsstranges.

Neben der Reibung kann auch eine Kompensation der Trägheitsmomente bei der erfindungsgemäßen Bestimmung der Steifigkeit zu einer Verbesserung der Genauigkeit der ermittelten Werte führen. In der über die Stromaufnahme ermittelten Kraft des Motors steckt nämlich nicht nur die zur Linearbewegung der Maschinenkomponente benötigte Kraft, sondern auch der Anteil zur Überwindung der Trägheitsmomente aller rotatorisch bewegten Komponenten, insbesondere der Spindel. Auch deren Anteil lässt sich bei Bedarf mittels bekannter Methoden messtechnisch ermitteln und bei den Steifigkeitswerten eliminieren.

Zur Bestimmung der von dem Motor zur Beschleunigung der Maschinenkomponente erforderlichen Kraft muss die Masse der Maschinenkomponente bekannt sein. Bei Werkzeugmaschinen ist die Masse einer über einen Antriebsstrang bewegten Maschinenkomponente in der Regel bekannt und in der Steuerung hinterlegt. Zur Berechnung der Kraft kann dann auf die bekannte Masse der jeweiligen Maschinenkomponente zurückgegriffen werden. Sollte bei einer bestimmten Maschine die Masse der bewegten Maschinenkomponente jedoch nicht bekannt sein, so kann auch diese mittels ohnehin vorhandenen Komponenten messtechnisch ermittelt werden. Die Messung beruht hierbei im Wesentlichen auf der Bestimmung des Motormoments bei einer konstant beschleunigten Bewegung der Maschinenkomponente. Auch bei der Bestimmung der Masse wird vorteilhaft die Reibung wie oben beschrieben kompensiert.

Die Erfindung bietet den Vorteil, dass aus der ermittelten Steifigkeit des Antriebsstrangs und insbesondere aus der Veränderung der Steifigkeit während der Laufzeit der Maschine oder aus dem Vergleich der ermittelten Steifigkeiten baugleicher Maschinen auf Eigenschaften bzw. den aktuellen Zustand des jeweiligen Antriebsstrangs einer bestimmten Maschine rückgeschlossen werden kann. So lässt sich beispielsweise aus einer Abflachung der Steifigkeits-Kennlinie, insbesondere im Nulldurchgang, eine nachlassende Vorspannung eines Kugelgewindetriebes folgern. Die Verringerung der Vorspannung verschlechtert die Positioniergenauigkeit der Maschine. Dies kann Auswirkungen auf die Qualität der mit der Maschine erzeugten Werkstücke haben. Vorteilhaft ist die numerische Steuerung der betreffenden Maschine so programmiert, dass die Abweichung der ermittelten Steifigkeit von einer idealen Steifigkeit registriert und ausgewertet wird und die Steuerung auf dieser Auswertung beruhend bestimmte Funktionen ausführt. Darunter fallen z.B. eine Mitteilung an einen Benutzer bezüglich der nachlassenden Steifigkeit, das Auslösen eines Alarms, das Anzeigen einer erforderlichen Wartung oder sogar ein Stopp der betreffenden Maschine. Vorteilhaft hängt die ausgewählte Funktion von der Höhe der Abweichung der Steifigkeit gegenüber einem Idealwert ab. Weiterhin kann vorteilhaft auch das Regelungsverhalten der numerischen Steuerung automatisch an eine ermittelte verringerte Steifigkeit angepasst werden, beispielsweise indem Werte für die maximal mögliche Beschleunigung oder den maximal möglichen Ruck herabgesetzt werden.

Die Erfindung wird nachfolgend anhand von Ausführungsbeispielen näher erläutert. Es zeigen:
FIG 1 einen Antriebsstrang einer Werkzeugmaschine,
FIG 2 eine Steifigkeits-Kennlinie des Antriebsstranges,
FIG 3 eine Stribeck-Kurve zur Ermittlung und Kompensation der Reibung und
FIG 4 die Verfahrensschritte bei der Durchführung eines erfindungsgemäßen Verfahrens.

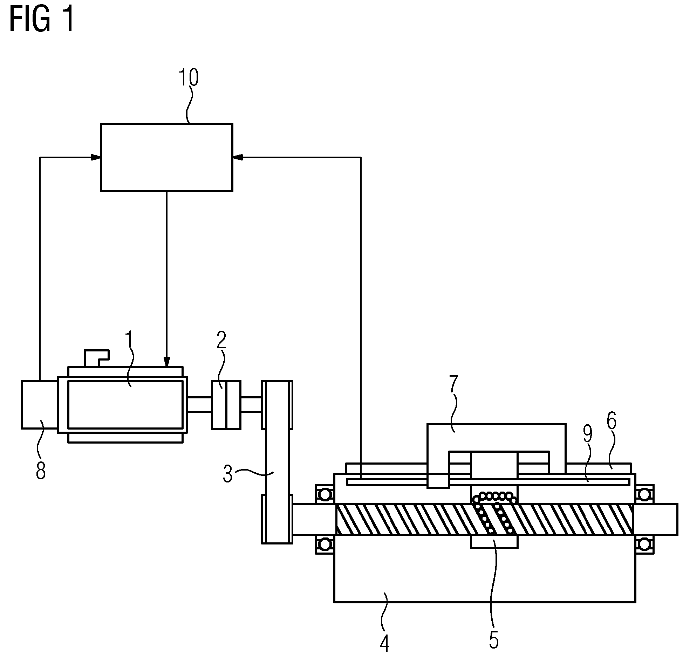

FIG 1 zeigt in schematischer Darstellung beispielhaft einen Antriebsstrang einer Werkzeugmaschine. Dieser umfasst einen rotativen Servomotor 1, der über eine Kupplung 2 und einen Zahnriemen 3 einen an einem Maschinenbett 4 befestigten Kugelgewindetrieb 5 antreibt. Der Kugelgewindetrieb 5 wandelt die rotative Bewegung des Motors über eine Spindel und eine Mutter in eine translatorische Bewegung eines Maschinentisches 7 um. Zur exakten Bewegungsführung des Maschinentisches 7 sind Linearführungen 6 vorhanden. Die Bestimmung der Position des Maschinentisches 7 gegenüber dem Maschinenbett 4 kann über den Motorgeber 8 in Verbindung mit dem bekannten Übersetzungsverhältnis der Übertragungselemente bestimmt werden. Darüber hinaus kann diese Position auch direkt über das Längenmesssystem 9 ermittelt werden.

Zur Positionierung des Maschinentisches 7 ist ferner eine numerische Steuerung 10 vorgesehen, die den Motor 1 über Stromrichter (nicht dargestellt) ansteuert und der zur Regelung der Bewegung des Motors 1 bzw. des Maschinentischs 7 die Sensorsignale des Motorgebers 8 und des Längenmesssystems 9 zugeführt sind.

Bei dem in FIG 1 gezeigten Aufbau handelt es sich um einen typischen Antriebsstrang zur exakten Positionierung eines Werkstücks oder eines Werkzeugs innerhalb einer Werkzeugmaschine. Dieser Aufbau kann ohne weitere Hilfsmittel - außer einer geeigneten Software - dazu verwendet werden, um die Steifigkeit des Antriebsstranges zu bestimmen. Für die anschließenden Berechnungen muss die Masse des Maschinentisches 7 in der Steuerung 10 bekannt sein. Im einfachsten Fall ist die Masse M des Maschinentisches 7 vorbekannt und muss nur durch entsprechende Benutzereingaben in der Steuerung 10 hinterlegt werden. Ist die Masse M des Maschinentisches 7 nicht bekannt, so kann sie anhand von Messungen des Motormoments während einer Bewegung des Maschinentisches 7 mit vorgegebener Beschleunigung ermittelt werden.

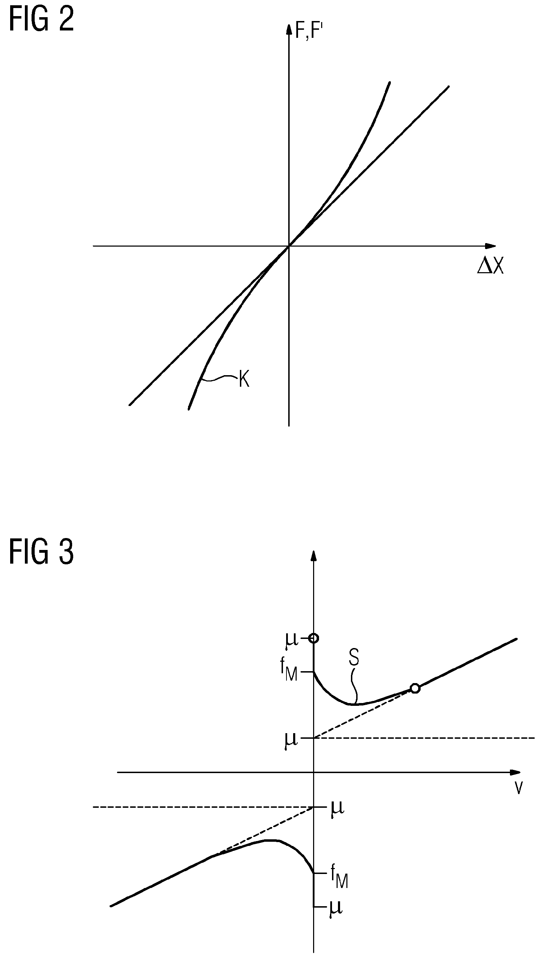

In einem ersten Verfahrensschritt zur Bestimmung der Steifigkeit des Antriebsstrangs wird nun eine konstante Beschleunigung a für die Bewegung des Maschinentisches 7 durch die numerische Steuerung 10 vorgegeben. Zu wenigstens einem bestimmten Zeitpunkt während dieser Beschleunigungsphase wird sowohl die anhand des Gebersignals des Motorgebers 8 als auch anhand des betreffenden Messwertes des Längenmesssystems 9 die Position des Maschinentisches 7 bestimmt. Aufgrund der endlichen Steifigkeit des Antriebsstranges ergibt sich eine Differenz Δx der beiden gemessenen Positionswerte. Diese Differenz Δx wird für die vorgegebene Beschleunigung bzw. die zum Erreichen der Beschleunigung erforderliche Kraft in der Steuerung 10 hinterlegt. Anschließend wird der Vorgang für eine Anzahl unterschiedlicher Beschleunigungen wiederholt. Es sei angemerkt, dass die Messvorgänge auch für negative Beschleunigungen, also Bremsvorgänge, ausgeführt werden. Durch eine Vielzahl an Messungen kann so eine Kennlinie der Kraft F über der Positionsdifferenz Δx angegeben werden. Beispielhaft ist eine derartige Kennlinie K in FIG 2 gezeigt, die die Kraft F oder die um die Reibung reduzierte Kraft F' über der Längenänderung Δx beschreibt. Auffällig dabei ist, dass es sich - im Unterschied zu einer idealen Feder - um einen nicht linearen Zusammenhang handelt. Insbesondere steigt die Kraft F bzw. F' mit zunehmendem Δx überproportional an.

Die Genauigkeit der so ermittelten Kennlinie steigt selbstverständlich mit der Anzahl der durchgeführten Messungen. Es kann jedoch bereits mit wenigen Messpunkten mittels an sich bekannter mathematischer Methoden eine entsprechende Kennlinie bestimmt werden. Da die Kennlinie insbesondere im Bereich ihres Nulldurchgangs für Aussagen über den Zustand der Maschine interessant ist, empfiehlt es sich, besonders in diesem Bereich die Messpunkte eng nebeneinander zu setzen.

Neben der Vorgabe unterschiedlicher Beschleunigungen kann der gesuchte Zusammenhang auch durch Maschinenkomponenten unterschiedlicher Masse gewonnen werden. Dies bedingt jedoch zwischen den einzelnen Messungen eine Veränderung an der Maschine und ist daher mit höherem Aufwand verbunden. Beispielsweise kann es sich bei der Maschinenkomponente um eine Werkzeugaufnahme in Verbindung mit einem darin eingespannten Werkzeug handeln. Dann können durch Verwendung unterschiedlicher Werkzeuge Messungen für Maschinenkomponenten durchgeführt werden, die sich hinsichtlich ihrer Massen unterscheiden. Auch diese Vorgehensweise ist durch die bei vielen Werkzeugmaschinen vorhandene Möglichkeit des automatischen Werkzeugwechsels weitgehend automatisierbar.

Genauere Ergebnisse bezüglich der ermittelten Steifigkeit ergeben sich, wenn auch die in dem Antriebsstrang vorhandene Reibung berücksichtigt wird. Dabei wird die Reibung vorteilhaft durch Bewegen der Achse mit verschiedenen, konstanten Geschwindigkeiten durch Auswertung der für die jeweilige Konstantfahrt benötigten Stromaufnahme des Motors bestimmt. Die so ermittelte Beschreibung des Verlaufs der Reibung in Abhängigkeit von der Bewegungsgeschwindigkeit ist auch als so genannte "Stribeck-Kurve" bekannt. Ein Beispiel für eine derartige Stribeck-Kurve S zur Beschreibung der Reibung µ über der Geschwindigkeit v ist in FIG 3 dargestellt. Auffällig dabei ist der Sprung im Nulldurchgang, der aus der Haftreibung resultiert.

Ist die Reibung gemäß der Stribeck-Kurve für den relevanten Geschwindigkeitsbereich bekannt, so kann die Reibung auch bei der zuvor beschriebenen beschleunigten Bewegung des Maschinentisches 7 berücksichtigt werden. Der Anteil der Reibung F_{R} kann somit über die Beziehung F' = m*a - F_{R} bei der Bestimmung der Steifigkeit herausgerechnet werden.

Das Herausrechen der Reibung hat den Vorteil, dass dadurch nicht zwei Ursachen für über die Laufzeit veränderte Maschinen-Eigenschaften vermischt werden, was die Bestimmung der genauen Ursache für eine bestimmte veränderte Maschineneigenschaft erschweren würde. Anders als bei einer veränderten Steifigkeit des Antriebsstranges liegen die Ursachen einer erhöhten Reibung nämlich beispielsweise im Bereich der Lagerungen und Führungen bzw. der Schmierung derselben.

Sowohl die ermittelte Steifigkeit als auch die Reibung können von der Position des Maschinentisches 7 in Bezug auf das Maschinenbett 4 abhängen. So kann es sinnvoll sein, die Steifigkeit bzw. die Reibung für unterschiedliche Positionen des Maschinentisches 7 entlang der Linearführung wie zuvor aufgezeigt zu bestimmen.

Die Steifigkeit ist eine wesentliche Eigenschaft eines Antriebsstranges. Insbesondere aus einem Vergleich der Steifigkeiten zwischen baugleichen Maschinen oder aus dem Vergleich der zu unterschiedlichen Zeitpunkten während der Lebensdauer einer bestimmten Maschine ermittelten Steifigkeiten kann auf bestimmte Eigenschaften bzw. den Zustand der Maschine zu einem bestimmten Zeitpunkt, insbesondere den aktuellen Zustand der Maschine, rückgeschlossen werden. Eine entsprechende Auswertung der aus mehreren Steifigkeitsmessungen hervorgehenden Ergebnisse kann direkt mittels der Steuerung 10 durchgeführt werden. Selbstverständlich kann eine entsprechende Auswertung jedoch auch in einer mit der numerischen Steuerung 10 verbundenen externen Recheneinrichtung erfolgen. Insbesondere deutet eine Abflachung der Steifigkeits-Kennlinie im Nulldurchgang auf einen Verlust der Vorspannung eines Kugelgewindetriebes hin. Darauf kann die Steuerung bzw. die externe Recheneinrichtung durch unterschiedliche Maßnahmen reagieren. So kann eine entsprechende Funktion der Steuerung darin bestehen, den Benutzer auf eine erforderliche Wartung hinzuweisen. Bei einer gravierenden Abweichung kann sogar eine automatische Außerbetriebsetzung der betreffenden Maschine erfolgen. Neben den beispielhaft genannten Reaktionen kann die Steuerung 10 jedoch auch ihr Regelungsverhalten automatisch an die geänderten Umstände anpassen. So ist es von Vorteil, wenn bei einem Verlust der Vorspannung des Kugelgewindetriebes automatisch die Verstärkung des Lageregelkreises reduziert wird. Ferner geht mit dem Verlust der Vorspannung auch eine Verschlechterung der dynamischen Genauigkeit einher, so dass vorteilhaft auch die durch die numerische Steuerung 10 vorgegebenen Werte bezüglich des maximalen Rucks und der maximalen Beschleunigung herabgesetzt werden.

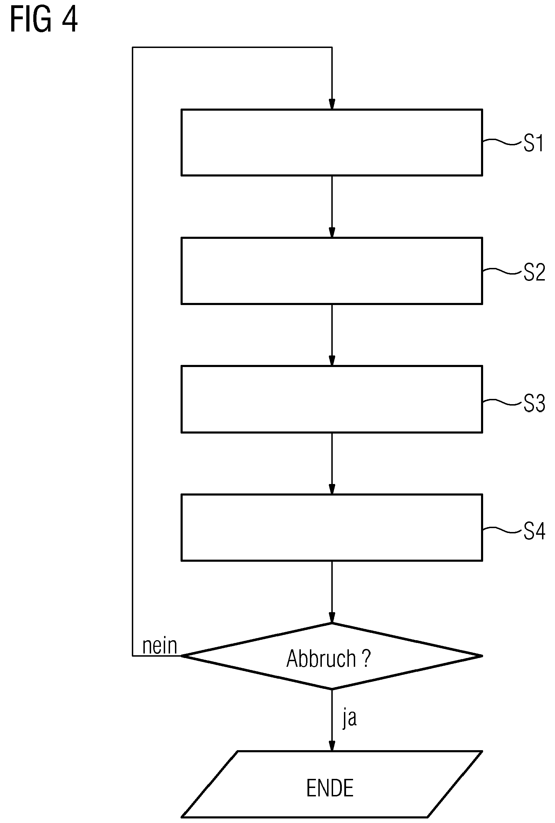

FIG 4 beschreibt nachfolgend die wesentlichen Verfahrensschritte eines bevorzugten erfindungsgemäßen Verfahrens zur Bestimmung der Steifigkeit eines Antriebsstranges zur linearen Bewegung einer Maschinenkomponente entlang einer Linearführung einer Maschine, insbesondere einer Werkzeug- oder Produktionsmaschine, wobei der Antriebsstrang einen Motor mit einem Motormesssystem umfasst, wobei der Linearführung ein Längenmesssystem zur Bestimmung der Position der Maschinenkomponente zugeordnet ist und wobei die Maschine eine numerische Steuerung zur Regelung der Bewegung der Maschinenkomponente umfasst:

In einem ersten Verfahrensschritt S1 wird vorteilhaft zunächst die Reibkraft aus einer Vielzahl an Messungen der Stromaufnahme des Motors ermittelt, bei denen die Maschinenkomponente mit unterschiedlichen Geschwindigkeiten, doch während der jeweiligen Messung mit konstanter Geschwindigkeit bewegt wird. Der Zusammenhang zwischen Geschwindigkeit und Reibung wird vorzugsweise in Form einer Stribeck-Kurve ermittelt und in der numerischen Steuerung hinterlegt.

In einem anschließenden zweiten Verfahrensschritt S2 wird mittels der numerischen Steuerung eine konstanten Beschleunigung für die Maschinenkomponente vorgegeben und die Maschinenkomponente entsprechend beschleunigt.

Nachfolgend wird in einem dritten Verfahrensschritt S3 eine Differenz Δx zwischen einer aus dem Motormesssystem abgeleiteten Position der Maschinenkomponente und einer zeitgleich während der Beschleunigungsphase durch das Längenmesssystem gemessenen Position der Maschinenkomponente mittels der numerischen Steuerung bestimmt.

Danach wird in einem vierten Verfahrensschritt S4 der Differenz Δx die eingangs festgelegte Beschleunigung a oder eine für die Beschleunigung erforderliche Kraft F zugeordnet und das so ermittelte Wertepaar und/oder ein aus dem Wertepaar hervorgehender Steifigkeitswert in der numerischen Steuerung gespeichert. Bei der Zuordnung von Δx zu F wird vorteilhaft der in Verfahrensschritt S1 ermittelte Einfluss der Reibung gemäß der Formel F' = m*a - F_{R} herausgerechnet.

Die Verfahrensschritte S1 bis S4 werden anschließend für eine Vielzahl an Messungen mit unterschiedlichen Beschleunigungen und/oder unterschiedlichen Massen wiederholt, solange bis eine gewünschte Genauigkeit bezüglich des Zusammenhangs zwischen Δx und F bzw. F' erreicht ist.

Vorzugsweise werden die Messpunkte in einem Verfahrensschritt S5 durch Anwendung an sich bekannter mathematischer Methoden zu einer Kennlinie verbunden und entsprechend in der numerischen Steuerung gespeichert.

## Patentansprüche

1. Verfahren zum Bestimmen der Steifigkeit eines Antriebsstranges (1 bis 6) zur linearen Bewegung einer Maschinenkomponente (7) entlang einer Linearführung (6) einer Maschine, insbesondere einer Werkzeug- oder Produktionsmaschine, wobei der Antriebsstrang (1 bis 6) einen Motor (1) mit einem Motormesssystem (8) umfasst, wobei der Linearführung (6) ein Längenmesssystem (9) zur Bestimmung der Position der Maschinenkomponente (7) zugeordnet ist und wobei die Maschine eine numerische Steuerung (10) zur Regelung der Bewegung der Maschinenkomponente (7) umfasst, durch
- Vorgeben einer konstanten Beschleunigung für die Maschinenkomponente (7) mittels der numerischen Steuerung (10),
- Bestimmen einer Differenz zwischen einer aus dem Motormesssystem (8) abgeleiteten Position der Maschinenkomponente (7) und einer zeitgleich durch das Längenmesssystem (9) gemessenen Position der Maschinenkomponente (7) während der Beschleunigungsphase mittels der numerischen Steuerung (10),
- Zuordnen der Differenz zu der Beschleunigung oder einer für die Beschleunigung erforderlichen Kraft und Speichern des so ermittelten Wertepaares und/oder eines aus dem Wertepaar hervorgehenden Steifigkeitswertes in der numerischen Steuerung (10).

2. Verfahren nach Anspruch 1, wobei die Verfahrensschritte für unterschiedliche Maschinenkomponenten und/oder Beschleunigungen solange wiederholt werden, bis ein Abbruchkriterium erreicht ist.

3. Verfahren nach Anspruch 2, wobei aus den ermittelten Wertepaaren eine Kennlinie (K) bestimmt und in der numerischen Steuerung (10) gespeichert wird.

4. Verfahren nach einem der Ansprüche 1 bis 3, wobei die zur Bewegung der Maschinenkomponente (7) zu überwindende Reibkraft ermittelt und kompensiert wird.

5. Verfahren nach Anspruch 4, wobei die Reibkraft aus einer Vielzahl an Messungen der Stromaufnahme des Motors (1) ermittelt wird, bei denen die Maschinenkomponente (7) mit unterschiedlichen Geschwindigkeiten, doch während der jeweiligen Messung mit konstanter Geschwindigkeit bewegt wird.

6. Verfahren nach Anspruch 4, wobei zur Bestimmung der Reibkraft in Abhängigkeit der Geschwindigkeit, mit der die Maschinenkomponente (7) bewegt wird, eine Stribeck-Kurve (S) messtechnisch ermittelt wird.

7. Verfahren nach Anspruch 6, wobei eine Vielzahl von Stribeck-Kurven (S) in Abhängigkeit der Position der Maschinenkomponente (7) bezüglich der Linearführung (6) bestimmt wird.

8. Verfahren nach einem der Ansprüche 1 bis 7, wobei der numerischen Steuerung (10) die Masse der Maschinenkomponente (7) vorgegeben wird.

9. Verfahren nach einem der Ansprüche 1 bis 7, wobei die Masse der Maschinenkomponente (7) messtechnisch mittels der numerischen Steuerung (10) ermittelt wird.

10. Verfahren nach einem der Ansprüche 1 bis 9, wobei die Steifigkeit des Antriebsstranges (1 bis 7) zu unterschiedlichen Zeitpunkten bestimmt wird und aus einem Vergleich der zu unterschiedlichen Zeitpunkten ermittelten Steifigkeit auf Eigenschaften des Antriebsstranges (1 bis 6) rückgeschlossen wird.

11. Verfahren nach einem der Ansprüche 1 bis 10, wobei die Steifigkeit mehrerer baugleicher Antriebsstränge bei mehreren Maschinen bestimmt wird und aus einem Vergleich der für die baugleichen Antriebsstränge ermittelten Steifigkeiten auf Eigenschaften des jeweiligen Antriebsstranges rückgeschlossen wird.

12. Verfahren nach Anspruch 10 oder 11, wobei die numerische Steuerung (10) in Abhängigkeit der ermittelten Eigenschaften vorbestimmte Funktionen ausführt.

13. Numerische Steuerung (10) für eine Maschine, insbesondere eine Produktions- oder Werkzeugmaschine, zur Durchführung eines Verfahrens nach einem Ansprüche 1 bis 12.

14. Maschine, insbesondere Produktions- oder Werkzeugmaschine, umfassend eine numerische Steuerung (10) nach Anspruch 13 zur Durchführung eines Verfahrens nach einem Ansprüche 1 bis 12.
